# EUROPEAN PATENT APPLICATION

(11) **EP 4 738 585 A1**
(43) Date of publication of application: **06.05.2026**
(21) Application number: 24831018.7
(22) Date of filing: 28.06.2024
(51) Int. Cl.: H01M 50/342, H01M 50/103, H01M 10/0525

(54) **CASE OF BATTERY, AND BATTERY**

(30) Priority: 28.06.2023 CN 202310776700
(71) Applicant: SVOLT Energy Technology Co., Ltd., Changzhou, Jiangsu 213200 (CN)
(72) Inventor: LI, Long, hangzhou, Jiangsu 213200 (CN)
(74) Representative: Michalski Hüttermann & Partner Patentanwälte mbB
(86) International application number: PCT/CN2024/102515
(87) International publication number: WO 2025/002391

(57) **Abstract**

The present application relates to the technical field of lithium-ion batteries, and more particularly to a case (100) of battery and a battery. A sidewall perpendicular to the width direction (Y) is defined as a first sidewall (101), and a sidewall perpendicular to the thickness direction (Z) is defined as a second sidewall (102). The first sidewall is provided with a mounting hole (105) for mounting an explosion-proof valve (104). In the thickness direction, the mounting hole (105) is located at the center of the first sidewall (101). The first sidewall is connected to two adjacent second sidewalls via rounded corner walls (103). Each rounded corner wall (103) includes a first side and a second side. The distance from the first side of the mounting hole (105) to the corresponding first side of the rounded corner wall (103), and the distance from the second side of the mounting hole (105) to the corresponding first side of the rounded corner wall (103), are both defined as "C". The dimension of the case in the thickness direction is "B", and the dimension of the mounting hole in the thickness direction is "E", wherein 0.05B≤C≤0.20B, and 0.35B≤E≤0.70B. The case (100) of battery and battery of the present application solve the problem of inappropriate distance between the edge of the explosion-proof valve and the rounded corner wall after adjusting the pressure relief mechanism to the sidewall of the case body.

## Description

### CROSS-REFERENCE TO RELATED APPLICATIONS

The present application claims priority to Chinese Patent Application No.2023107767009, filed on June 28, 2023, entitled "Case of battery and battery", the entire contents of which are incorporated herein by reference.

### TECHNICAL FIELD

The present application relates to the technical field of lithium-ion batteries, and in particular, to a case of battery and a battery.

### BACKGROUND

With continuous technological advancements, users have increasingly higher demands for new energy batteries. To improve the safety performance of an individual battery cell, a pressure relief mechanism is typically installed on the battery cell. When the battery cell malfunctions and generates internal gas, the pressure relief mechanism releases the gas, in order to prevent major safety incidents.

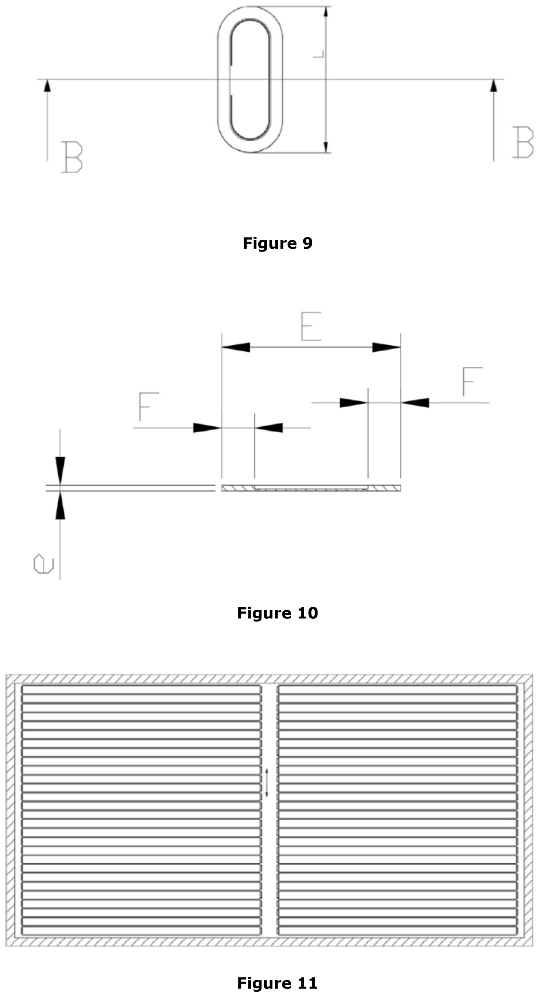

In the existing technology, as shown in Figure 11, an explosion-proof valve is located on the cap plate. During the assembly of a battery pack, vents are pre-installed at both ends of the cell to release gas generated when the explosion-proof valve is opened in the event of thermal runaway. However, the presence of these vents at both ends of the cell significantly occupies space of the battery pack, hindering further improvements in the energy density of the battery pack.

By moving the explosion-proof valve from the cap plate to the sidewall of the case body, gas is directly discharged downwards. During cell-to-pack assembly, vents at both ends of the cell are no longer necessary. This allows for increasing the cell length or maintaining the same cell dimension while reducing the dimension of the battery pack, thereby significantly improving the energy density or the volume utilization of the battery pack.

Therefore, moving the pressure relief structure from the cap plate to the sidewall of the case body is a highly effective method for improving the energy density of the battery pack.

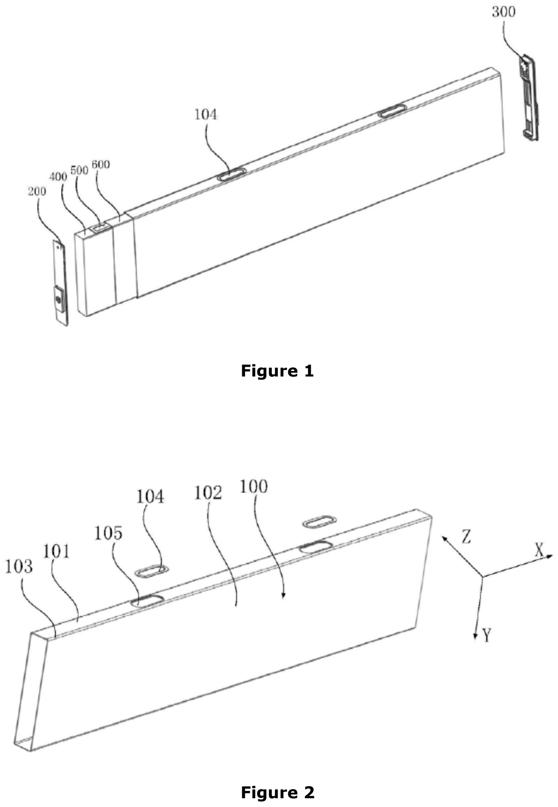

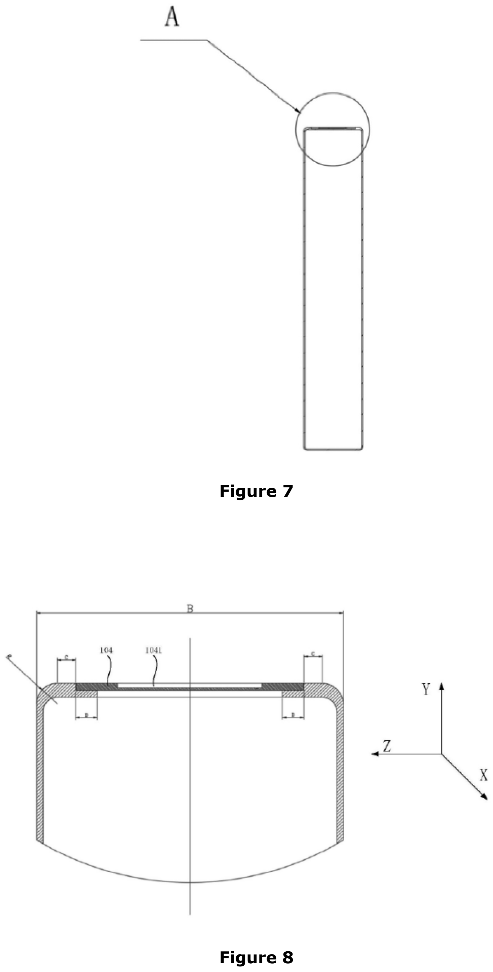

In view of this, after adjusting the pressure relief mechanism to the sidewall of the case body, the pressure relief mechanism needs to be reliably fixed to the case body to prevent leakage. Specifically, as shown in Figures 2 and 8, if the distance "C" between the edge of the explosion-proof valve and the rounded corner wall is too small (or the width of the explosion-proof valve is too large) in the thickness direction of the case body, the heat generated during welding will deform the outer walls on both sides of the case body. This also hinders the airtightness test after welding, potentially leading to products that fail the airtightness test being incorrectly identified as normal (because a sealing ring needs to be installed at position "C" during the airtightness test).

If the distance "C" between the edge of the explosion-proof valve and the rounded corner wall is too large (or the width of the explosion-proof valve is too small), the effective exhaust area will be small when the explosion-proof valve is opened, failing to promptly remove gas from inside the case body, resulting in high internal pressure inside the case body and posing a safety risk.

### SUMMARY OF INVENTION

The objective of the present application is to provide a case of battery and a battery that can solve a series of problems caused by the inappropriate distance between the edge of the explosion-proof valve and the rounded corner wall after adjusting the pressure relief mechanism to the sidewall of the case body.

According to a first aspect of the present application, a case of battery is provided. The case has a length direction, a width direction, and a thickness direction. A sidewall perpendicular to the width direction is defined as a first sidewall, and a sidewall perpendicular to the thickness direction is defined as a second sidewall. The first sidewall is provided with a mounting hole for mounting an explosion-proof valve. In the thickness direction, the mounting hole is located at the center of the first sidewall. The first sidewall is connected to two adjacent second sidewalls via rounded corner walls. Each rounded corner wall includes a first side and a second side. The first side of the rounded corner wall is connected to the first sidewall, and the second side of the rounded corner wall is connected to the second sidewall. The mounting hole includes a first side and a second side opposite to each other in the thickness direction. The distance from the first side of the mounting hole to the corresponding first side of the rounded corner wall, and the distance from the second side of the mounting hole to the corresponding first side of the rounded corner wall, are both defined as "C". The dimension of the case in the thickness direction is "B", and the dimension of the mounting hole in the thickness direction is "E", wherein 0.05B≤C≤ 0.20B, and 0.35B≤E≤0.70B.

In any of the above technical solutions, optionally, C≥2mm.

In any of the above technical solutions, optionally, the radius of the cross-section of the cylindrical surface containing the outer circular surface of the rounded corner wall is "R", wherein E=B-2R-2C.

In any of the above technical solutions, optionally, the mounting hole includes a stepped portion and a through-hole. The stepped portion is arranged circumferentially along the through-hole, and the stepped portion divides the through-hole into a first oblong-hole and a second oblong-hole. The first oblong-hole is located on the outer side of the first sidewall, and the second oblong-hole is located on the inner side of the first sidewall. The cross-sectional area of the first oblong-hole is larger than the cross-sectional area of the second oblong-hole, and the explosion-proof valve is installed in the first oblong-hole.

In any of the above technical solutions, optionally, the dimension of the first oblong-hole in the width direction is "f", and the dimension of the explosion-proof valve in the width direction is "e", wherein f≥e+0.1mm.

In any of the above technical solutions, optionally, a thinning zone is provided in the middle of the explosion-proof valve, the distance from the outer edge of the thinning zone to the outer edge of the explosion-proof valve is "F", and the distance from the inner edge of the stepped portion to the outer edge of the stepped portion is "D", wherein D≤F.

In any of the above technical solutions, optionally, 0.5mm≤D.

A second aspect of the present application provides a battery, including the case of battery as described above.

In any of the above technical solutions, optionally, the battery further includes an explosion-proof valve installed in the mounting hole, and the dimension of the explosion-proof valve in the length direction is "L", wherein L/E≤10.

In any of the above technical solutions, optionally, the battery further includes a positive electrode cap plate, a negative electrode cap plate, a cell, a side plate, and an insulating protective film. The insulating protective film is sleeved on the cell, the side plate is installed on the sidewall of the battery cell for fixing the insulating protective film, the case is sleeved on the insulating protective film, and two openings are respectively provided at both ends of the case. The positive electrode cap plate and the negative electrode cap plate are respectively installed in the two openings.

According to the case of battery of the present application, the case has a length direction, a width direction, and a thickness direction. A sidewall defining the vertical width direction of the case is a first sidewall, and a sidewall defining the vertical thickness direction of the case is a second sidewall. The first sidewall is provided with a mounting hole for mounting an explosion-proof valve. In the thickness direction, the mounting hole is located at the center of the first sidewall. The first sidewall is connected to two adjacent second sidewalls via rounded corner walls. Each rounded corner wall includes a first side and a second side. The first side of the rounded corner wall is connected to the first sidewall, and the second side of the rounded corner wall is connected to the second sidewall. The mounting hole includes a first side and a second side opposite to each other in the thickness direction. The distance from the first side of the mounting hole to the corresponding first side of the rounded corner wall, and the distance from the second side of the mounting hole to the corresponding first side of the rounded corner wall are defined as "C". The dimension of the case in the thickness direction is "B", and the dimension of the mounting hole in the thickness direction is "E", then 0.05B≤C≤0.20B, and 0.35B≤E≤0.70B.

To improve the energy density of the battery pack, the present application adjusts the explosion-proof valve to the first sidewall of the case body. Furthermore, based on this, the following limits are set: 0.05B≤C≤0.20B, 0.35B≤E≤0.70B. That is, it defines the proportion of the explosion-proof valve on the entire first sidewall, ensuring that the distance "C" between the edge of the explosion-proof valve and the rounded corner wall in the thickness direction of the case body is neither too large nor too small.

To make the above-mentioned objects, features, and advantages of the present application more apparent and understandable, preferred embodiments are described below in detail with reference to the appended drawings.

### BRIEF DESCRIPTION OF THE DRAWINGS

To more clearly illustrate the technical solutions of the embodiments of the present application, the appended drawings used in the embodiments will be briefly described below. It should be understood that the following drawings only show some embodiments of the present application and should not be considered as a limitation of the scope. For those skilled in the art, other related drawings can be obtained based on these drawings without creative effort.
Figure 1 shows a schematic diagram of the overall exploded structure of a battery according to an embodiment of the present application;
Figure 2 shows a schematic diagram of the installation structure of the explosion-proof valve and the case according to an embodiment of the present application;
Figure 3 shows a side view of the case according to an embodiment of the present application;
Figure 4 shows a cross-sectional view along line "A-A" of Figure 3;
Figure 5 shows an enlarged view of part "B" of Figure 4;
Figure 6 shows a side view of the case after the explosion-proof valve is installed according to an embodiment of the present application;
Figure 7 shows a cross-sectional view along line "A-A" of Figure 6;
Figure 8 shows an enlarged view of part "A" of Figure 7;
Figure 9 shows a structural schematic diagram of the explosion-proof valve according to an embodiment of the present application;
Figure 10 shows a cross-sectional view along line "B-B" of Figure 9;
Figure 11 shows a structural schematic diagram of a cell assembly installed in a battery pack in the prior art.

### Reference numbers:

100 - Case; 101 - First sidewall; 102 - Second sidewall; 103 - Rounded corner wall; 104 - Explosion-proof valve; 1041 - Thinning zone; 105 - Mounting hole; 1051 - Stepped portion; 1052 - First oblong-hole; 1053 - Second oblong-hole; 200 - Positive electrode cap plate; 300 - Negative electrode cap plate; 400 - Cell; 500 - Side plate; 600 - Insulating protective film; X - Length direction; Y - Width direction; Z - Thickness direction.

### DETAILED DESCRIPTION OF EMBODIMENTS

The following detailed embodiments are provided to aid the reader in gaining a comprehensive understanding of the methods, apparatus, and/or systems described herein. However, various changes, modifications, and equivalents of the methods, apparatus, and/or systems described herein will become apparent after understanding the disclosure of the present application. For example, the order of operations described herein is merely illustrative and is not limited to the order presented herein; Rather, changes that will become apparent after understanding the disclosure of the present application are possible, except for operations that must occur in a specific order. Furthermore, for clarity and brevity, descriptions of features known in the art may be omitted.

The features described herein may be implemented in different forms and should not be construed as being limited to the examples described herein. Rather, the examples described herein are provided only to illustrate some of the many possible ways of implementing the methods, apparatus, and/or systems described herein that will become apparent after understanding the disclosure of the present application.

Throughout this specification, when an element (such as a layer, region, or substrate) is described as being "on" another element, "attached" to another element, "bonded" to another element, "above" another element, or "covering" another element, it may be directly "on" another element, "attached" to another element, "bonded" to another element, "above" another element, or "covering" another element, or there may be one or more other elements in between. Conversely, when an element is described as being "directly on" another element, "directly attached" to another element, "directly bonded" to another element, "directly above" another element, or "directly covering" another element, there may be no other elements in between.

As used herein, the term "and/or" includes any one of the relevant items listed and any combination of any two or more of them.

Although terms such as "first," "second," and "third" may be used herein to describe individual components, assemblies, regions, layers, or portions, these components, assemblies, regions, layers, or portions are not limited by these terms. More precisely, these terms are used only to distinguish one component, assembly, region, layer, or part from another. Therefore, without departing from the teachings of the examples described herein, the first component, assembly, region, layer, or part referred to as such in the examples may also be referred to as the second component, assembly, region, layer, or part.

For ease of description, spatial relational terms such as "above," "upper," "below," and "lower" may be used herein to describe the relationship between one element and another, as shown in the appended drawings. Such spatial relational terms are intended to include not only the orientation depicted in the drawings but also different orientations of the device in use or operation. For example, if the device in the drawings is flipped, an element described as being "above" or "upper" relative to another element will subsequently be "below" or "lower" relative to that other element. Therefore, the term "above" includes both "above" and "below" orientations depending on the spatial orientation of the device. The device may also be positioned in other ways (e.g., rotated 90 degrees or in other orientations), and the spatial relational terms used herein will be interpreted accordingly.

The terminology used herein is for describing various examples only and is not intended to limit this disclosure. Unless the context clearly indicates otherwise, the singular form is also intended to include the plural form. The terms "comprising," "including," and "having" enumerate the stated features, quantities, operations, components, elements, and/or combinations thereof, but do not exclude the presence or addition of one or more other features, quantities, operations, components, elements, and/or combinations thereof.

Due to manufacturing techniques and/or tolerances, variations in the shapes shown in the figures may occur. Therefore, the examples described herein are not limited to the specific shapes shown in the appended drawings, but include changes in shape that occur during manufacturing.

Features of the examples described herein can be combined in various ways that will be apparent upon understanding the disclosure of the present application. Furthermore, although the examples described herein have a wide variety of constructions, other constructions are possible, as will be apparent upon understanding the disclosure of the present application.

The present application provides a case of battery that solves the problem of difficulty in controlling the distance between the edge of the explosion-proof valve and the rounded corner wall after adjusting the pressure relief mechanism to the sidewall of the case body.

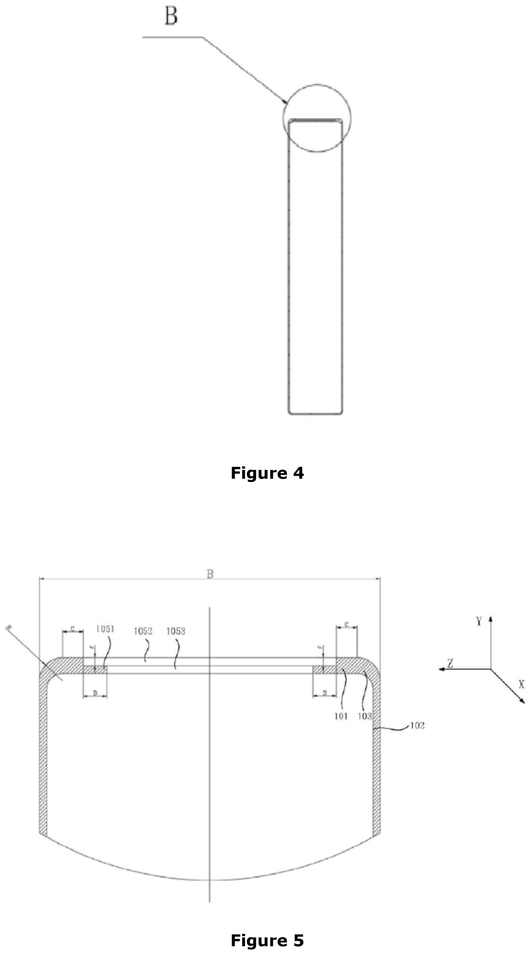

As shown in Figures 2, 5, and 8, the case 100 according to the present application has a length direction "X", a width direction "Y", and a thickness direction "Z". The sidewall defining the vertical width direction "Y" of the case 100 is a first sidewall 101, and the sidewall defining the vertical thickness direction "Z" of the case 100 is a second sidewall 102 (the area of the first sidewall 101 is smaller than the area of the second sidewall 102). The first sidewall 101 is provided with a mounting hole 105 (one or more mounting holes 105) for mounting the explosion-proof valve 104. In the thickness direction "Z", the mounting hole 105 is located at the center of the first sidewall 101 (as shown in Figure 5, the plane of symmetry of the mounting holes 105 is coplanar with the plane of symmetry of the first sidewall 101). The first sidewall 101 is connected to two adjacent second sidewalls 102 via rounded corner walls 103.

Optionally, as shown in Figures 2, 5, and 8, the plane of symmetry of the mounting hole 105 is coplanar with the plane of symmetry of the outer case 100 (the plane of symmetry is perpendicular to the thickness direction "Z"), that is, the structures and dimensions of the two rounded corner walls 103 are equal. Here, the radius of the cross-section of the cylindrical surface containing the outer circular surface of the rounded corner wall 103 is defined as "R".

Each rounded corner wall 103 includes a first side and a second side (extending from the first side along an arc to the second side). The first side of the rounded corner wall 103 is connected to the first sidewall 101, and the second side of the rounded corner wall 103 is connected to the second sidewall 102. The mounting hole 105 includes a first side and a second side opposite to each other in the thickness direction "Z". The distance from the first side of the mounting hole 105 to the corresponding first side of the rounded corner wall 103, and the distance from the second side of the mounting hole 105 to the corresponding first side of the rounded corner wall 103 are defined as "C" (i.e., the shortest distance from the edge of the mounting hole 105 to the rounded corner wall 103 is "C"). The dimension of the case 100 in the thickness direction "Z" is "B", and the dimension of the mounting hole 105 in the thickness direction "Z" is "E". Taking the outer surface of the case 100 as an example, in the thickness direction "Z" of the case 100, E=B-2R-2C.

To improve the energy density of the battery pack, the present application adjusts the explosion-proof valve 104 onto the first sidewall 101 of the case body. Furthermore, based on this, the following limits are set: 0.05B≤C≤0.20B, 0.35B≤E ≤0.70B. This defines the proportion of the explosion-proof valve 104 on the entire first sidewall 101, ensuring that the distance "C" between the edge of the explosion-proof valve 104 and the rounded corner wall 103 in the thickness direction "Z" of the case body is neither too large nor too small.

Here, as shown in Figures 5 and 8, in order to ensure that the heat generated during welding of the explosion-proof valve 104 does not deform the two second sidewalls 102 of the case 100, and to provide space for installing a sealing ring during airtightness testing, C≥2mm.

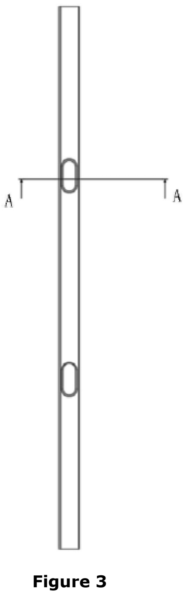

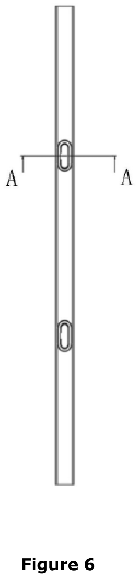

Optionally, in the embodiments of the present application, in order to satisfy the manufacturability of the connection between the pressure relief mechanism and the case 100, the helium-detectable at the connection, and the timely removal of internal gas when the pressure relief mechanism is opened, the specific structure and dimensions of the rounded corner wall 103, the explosion-proof valve 104, and the mounting hole 105 will be described in detail below with reference to Figures 1 to 11.

In an embodiment of the present application, as shown in Figure 5, the mounting hole 105 includes a stepped portion 1051 and a through-hole. The stepped portion 1051 is arranged circumferentially along the through-hole (the stepped portion 1051 is arranged around the inner wall of the through-hole, and its dimensions are equal in the thickness direction "Z"). The stepped portion 1051 divides the through-hole into a first oblong-hole 1052 and a second oblong-hole 1053. The first oblong-hole 1052 and the second oblong-hole 1053 are arranged along the width direction "Y". The first oblong-hole 1052 is located on the outer side of the first sidewall 101, and the second oblong-hole 1053 is located on the inner side of the first sidewall 101. The cross-sectional area of the first oblong-hole 1052 is larger than the cross-sectional area of the second oblong-hole 1053. The explosion-proof valve 104 is installed in the first oblong-hole 1052.

In an embodiment of the present application, as shown in Figure 5, the dimension of the first oblong-hole 1052 in the width direction "Y" is defined as "f" (i.e., the distance from the upper surface of the stepped portion 1051 to the outer surface of the first oblong-hole 1052 is "f"), and the dimension of the explosion-proof valve 104 in the width direction "Y" is defined as "e", where f≥e+0.1 mm. This ensures that the height of the explosion-proof valve 104 does not exceed the first oblong-hole 1052, that is, the height of the explosion-proof valve 104 does not exceed the overall case 100, thereby ensuring that the weld seam between the explosion-proof valve 104 and the first sidewall 101 does not extend beyond the overall case 100.

In an embodiment of the present application, as shown in Figures 8 and 10, a thinning region 1041 is provided at the center of the explosion-proof valve 104. The distance from the outer edge of the thinning region 1041 to the outer edge of the explosion-proof valve 104 is defined as "F", and the distance from the inner edge of the stepped portion 1051 to the outer edge of the stepped portion 1051 is defined as "D", where D≤F. This ensures that the stepped portion 1051 does not affect the thinning area 1041 of the explosion-proof valve 104, thereby ensuring that the effective area of the thinning area 1041 can expel gas from the case body when the explosion-proof valve 104 is opened.

Optionally, when 0.5mm≥D, the first sidewall 101 with the stepped portion 1051 is difficult to manufacture, and the mold used for manufacturing is easily damaged. Therefore, in the present embodiment, 0.5mm≤D, ensuring that the first sidewall 101 with the stepped portion 1051 is easy to manufacture.

Optionally, in order to ensure the connection stability and exhaust area of the explosion-proof valve 104, in the present embodiment, as shown in Figures 9 and 10, the dimension of the explosion-proof valve 104 in the length direction "X" is defined as "L", then L/E≤10.

According to a second aspect of the present application, a battery (which can be a secondary battery) is provided, including the case of battery as described above.

Optionally, as shown in Figure 1, the battery further includes a positive electrode cap plate 200, a negative electrode cap plate 300, a cell 400, a side plate 500, and an insulating protective film 600. The insulating protective film 600 is sleeved on the battery cell 400, the side plate 500 is installed on the sidewall of the battery cell 400 to fix the insulating protective film 600. The case 100 is sleeved on the insulating protective film 600. Two openings are respectively provided at both ends of the case 100, and the positive electrode cap plate 200 and the negative electrode cap plate 300 are respectively installed in the two openings.

Finally, it should be noted that the above-described embodiments are merely embodiments of the present application, used to illustrate the technical solutions of the present application, and not to limit them. The protection scope of the present application is not limited thereto. Although the present application has been described in detail with reference to the foregoing embodiments, those skilled in the art should understand that any person skilled in the art can still modify or easily conceive of changes to the technical solutions described in the foregoing embodiments within the scope of the technology disclosed in the present application, or make equivalent substitutions for some of the technical features. Such modifications, changes, or substitutions do not cause the essence of the corresponding technical solutions to deviate from the spirit and scope of the technical solutions of the embodiments of the present application, and should all be covered within the protection scope of the present application.

## Claims

1. A case of battery, **characterized in that**, the case has a length direction, a width direction, and a thickness direction, a sidewall perpendicular to the width direction is defined as a first sidewall,
a sidewall perpendicular to the thickness direction is defined as a second sidewall, the first sidewall is provided with a mounting hole for mounting an explosion-proof valve,
in the thickness direction, the mounting hole is located at the center of the first sidewall,
the first sidewall is connected to two adjacent second sidewalls via rounded corner walls,
each rounded corner wall comprises a first side and a second side,
the first side of the rounded corner wall is connected to the first sidewall, and the second side of the rounded corner wall is connected to the second sidewall,
the mounting hole comprises a first side and a second side opposite to each other in the thickness direction,
the distance from the first side of the mounting hole to the corresponding first side of the rounded corner wall, and the distance from the second side of the mounting hole to the corresponding first side of the rounded corner wall, are both defined as "C",
the dimension of the case in the thickness direction is "B",
and the dimension of the mounting hole in the thickness direction is "E",
wherein 0.05B≤C≤0.20B, and 0.35B≤E≤0.70B.

2. The case of battery according to claim 1, **characterized in that**, C≥2 mm.

3. The case of battery according to claim 1, **characterized in that**, the radius of the cross-section of the cylindrical surface containing the outer circular surface of the rounded corner wall is "R",
wherein E=B-2R-2C.

4. The case of battery according to claim 1, **characterized in that**, the mounting hole comprises a stepped portion and a through-hole, and the stepped portion is arranged circumferentially along the through-hole,
the stepped portion divides the through-hole into a first oblong-hole and a second oblong-hole,
wherein the first oblong-hole is located on the outer side of the first sidewall, and the second oblong-hole is located on the inner side of the first sidewall,
the cross-sectional area of the first oblong-hole is larger than the cross-sectional area of the second oblong-hole,
and the explosion-proof valve is installed in the first oblong-hole.

5. The case of battery according to claim 4, **characterized in that**, the dimension of the first oblong-hole in the width direction is "f",
and the dimension of the explosion-proof valve in the width direction is "e",
wherein f≥e+0.1mm.

6. The case of battery according to claim 4, **characterized in that**, a thinning zone is provided in the middle of the explosion-proof valve,
the distance from the outer edge of the thinning zone to the outer edge of the explosion-proof valve is "F",
and the distance from the inner edge of the stepped portion to the outer edge of the stepped portion is "D",
wherein D≤F.

7. The case of battery according to claim 6, **characterized in that**, 0.5mm≤D.

8. A battery, **characterized in that**, it comprises a case of battery according to any one of claims 1-7.

9. The battery according to claim 8, **characterized in that**, the battery further comprises an explosion-proof valve installed in the mounting hole,
and the dimension of the explosion-proof valve in the length direction is "L",
wherein L/E≤10.

10. The battery according to claim 8, **characterized in that**, the battery further comprises a positive electrode cap plate, a negative electrode cap plate, a cell, a side plate, and an insulating protective film,
the insulating protective film is sleeved on the cell,
the side plate is installed on the sidewall of the battery cell for fixing the insulating protective film,
the case is sleeved on the insulating protective film,
two openings are respectively provided at both ends of the case, and the positive electrode cap plate and the negative electrode cap plate are respectively installed in the two openings.
